# EUROPÄISCHE PATENTSCHRIFT

(11) **EP 3 199 343 B1**
(45) Veröffentlichungstag und Bekanntmachung des Hinweises auf die Patenterteilung: **17.07.2024**
(21) Anmeldenummer: 16202494.7
(22) Anmeldetag: 06.12.2016
(51) Int. Cl.: B32B 27/38, B29C 65/06, B29C 65/08, B32B 27/28, B32B 27/36

(54) **VERBINDUNGSELEMENT, VERBINDUNGSANORDNUNG, VERFAHREN ZUM HERSTELLEN EINES VERBINDUNGSELEMENTS UND VERFAHREN ZUM HERSTELLEN EINER VERBINDUNGSANORDNUNG**
CONNECTING ELEMENT, CONNECTION ASSEMBLY, METHOD FOR PRODUCING A CONNECTING ELEMENT, AND METHOD FOR PRODUCING A CONNECTION ASSEMBLY
ÉLÉMENT DE LIAISON, SYSTÈME DE LIAISON, PROCÉDÉ DE PRODUCTION D'UN ÉLÉMENT DE LIAISON ET PROCÉDÉ DE PRODUCTION D'UN SYSTÈME DE LIAISON

(30) Priorität: 08.12.2015 DE 102015224613
(43) Veröffentlichungstag der Anmeldung: 02.08.2017
(73) Patentinhaber: Airbus Defence and Space GmbH, 82024 Taufkirchen (DE)
(72) Erfinder: Meer, Thomas, 85625 Glonn (DE)
(74) Vertreter: Isarpatent

(56) Entgegenhaltungen:
- WO-A1-2007/109855
- WO-A1-2012/161569
- US-A- 5 667 881

## Beschreibung

Die vorliegende Erfindung betrifft ein Verfahren zum Herstellen eines Verbindungselements, ein durch das Verfahren herstellbares Verbindungselement, eine Verbindungsanordnung enthaltend das Verbindungselement, sowie ein Verfahren zum Herstellen einer Verbindungsanordnung.

Obwohl auf beliebige Verbundbauteile umfassend ein Epoxidharz anwendbar, werden die vorliegende Erfindung sowie die ihr zugrunde liegende Problematik in Bezug auf kohlenfaserverstärkte Kunststoffe, auch carbonfaserverstärkte Kunststoffe (CFK) genannt, näher erläutert.

Bei CFK werden Anbindungsstellen zu anderen Bauteilen bisweilen zumeist mittels Ankleben, das heißt auf Adhäsion basierend, realisiert.

Andere Ansätze zum Anbringen von Anbindungsteilen an eine Epoxidmatrix, welche bereits bei der Herstellung des Bauteils zu berücksichtigen sind, basieren auf einem Aufbringen einer Thermoplastschicht durch stoffliches Verbinden des thermoplastischen Materials mit dem Matrixmaterial, insbesondere während des Aushärtens des Matrixmaterials.

Eine derartiger Ansatz ist in der US 2009/0246548 A1 beschrieben. Demnach wird eine semikristallines thermoplastisches Polymer auf ein ungehärtetes duroplastisches Polymer, dessen Aushärtetemperatur oberhalb der Schmelztemperatur des semikristallinen thermoplastischen Polymers liegt, aufgebracht. Beim Erhitzen auf die Aushärtetemperatur des durplastischen Polymers vermischen sich das thermoplastische Polymer und das duroplastische Polymer bevor das duroplastische Polymer aushärtet. Nach einem Abkühlen kann im Bereich des thermoplastischen Polymers dann eine Komponente mit einer passenden thermoplastischen Oberfläche angeschweißt werden. Weitere Anbindungsverfahren finden sich in der WO 2012/161569 A1, der US 5 667 881 A, und der WO 2007/109855 A1

Es ist nun Aufgabe der vorliegenden Erfindung ein verbessertes Verbindungselement und eine verbesserte Verbindungsanordnung bereitzustellen.

Erfindungsgemäß wird diese Aufgabe durch ein Verfahren zum Herstellen eines Verbindungselements mit den Merkmalen des Patentanspruchs 1 und/oder ein durch das Verfahren herstellbares Verbindungselement mit den Merkmalen des Patentanspruchs 2 und/oder durch eine Verbindungsanordnung mit den Merkmalen des Patentanspruchs 10 und/oder ein Verfahren zum Herstellen einer Verbindungsanordnung mit den Merkmalen des Patentanspruchs 11 gelöst.

Demgemäß ist vorgesehen:
- Ein Verfahren zur Herstellung eines Verbindungselements, umfassend die folgenden Verfahrensschritte:
- i) Bereitstellen eines Rohverbundbauteils umfassend mindestens ein ungehärtetes Epoxidharz;
- ii) Aufbringen einer ersten Schicht umfassend ein erstes thermoplastisches Polymer auf das Rohverbundbauteil, wobei das erste thermoplastische Polymer eine Schmelztemperatur und eine Glasübergangstemperatur, aufweist, die über einer Aushärtetemperatur des Epoxidharzes liegt; und
- iii) Aushärten des Rohverbundbauteils bei einer Temperatur von mindestens 150 °C, wobei sich das erste thermoplastische Polymer bei der Temperatur von mindestens 150 °C in dem mindestens einen ungehärteten Epoxidharz löst, wobei das thermoplastische Polymer eine Glasübergangstemperatur höher als 185 °C, insbesondere höher als 200 °C, aufweist,
- wobei das ungehärtete Epoxidharz eine Aushärtungstemperatur von maximal 180°C hat,
- dadurch gekennzeichnet,
- dass das thermoplastische Polymer durch eine Temperaturerhöhung im Kontaktbereich mit dem ungehärteten Epoxidharz teilweise in dem ungehärteten Epoxidharz gelöst wird und die Temperatur dann vor einem vollständigen Lösen des thermoplastischen Polymers im Epoxidhart auf eine Temperatur der Härtungstemperatur oder mehr des Epoxidharzes erhöht wird.
- Ein Verbindungselement, mit: einem Verbundbauteil, welches ein gehärtetes Epoxidharz umfasst; einer ersten Schicht, welche ein erstes thermoplastisches Polymer umfasst; einer Zwischenschicht, welche zwischen dem Verbundbauteil und der ersten Schicht angeordnet ist und sowohl das gehärtete Epoxidharz des Verbundbauteils wie auch das erste thermoplastische Polymer der ersten Schicht enthält; wobei das erste thermoplastische Polymer eine Schmelztemperatur und eine Glasübergangstemperatur aufweist, die über einer Aushärtetemperatur des Epoxidharzes liegt; wobei das erste thermoplastische Polymer bei einer Temperatur von mindestens 150 °C in dem Epoxidharz, das zur Herstellung des Verbundbauteils verwendet wird, lösbar ist; wobei das thermoplastische Polymer eine Glasübergangstemperatur höher als 185 °C, insbesondere höher als 200 °C, aufweist, wobei das Epoxidharz sich ausgehend von dem Verbundbauteil in Richtung zu der ersten Schicht in Form einer Vielzahl von aneinander angrenzenden und/oder zumindest teilweise miteinander verbundenen Volumenabschnitten, insbesondere Blasen, in die Zwischenschicht erstreckt und die Volumenabschnitte in einem an das Verbundbauteil angrenzenden Bereich der Zwischenschicht einen größeren Durchmesser und/oder ein größeres Volumen aufweisen als in einem an die erste Schicht angrenzenden Bereich der Zwischenschicht, wobei das Epoxidharz als ungehärtetes Epoxidharz eine Aushärtungstemperatur von maximal 180°C hat, das Verbindungselement herstellbar durch das erfindungsgemäße Verfahren zur Herstellung eines Verbindungselements.
- Eine Verbindungsanordnung, mit: einem erfindungsgemäßen Verbindungselement; und einem mit dem Verbindungselement verbundenen Bauteil, wobei das Bauteil an die erste und/oder eine zweite Schicht des Verbindungselements mittels Schweißen, insbesondere mittels Reibschweißen, bevorzugt mittels zirkularem Vibrationsreibschweißen, angeschweißt ist.
- Ein Verfahren zum Herstellen einer Verbindungsanordnung, insbesondere einer erfindungsgemäßen Verbindungsanordnung, mit den folgenden Verfahrensschritten: Bereitstellen eines erfindungsgemäßen Verbindungselements und/oder eines nach einem erfindungsgemäßen Verfahren hergestellten Verbindungselements; Anschweißen eines mit dem Verbindungselement zu verbindenden Bauteils an die erste und/oder zweite Schicht des Verbindungselements mittels Reibschweißen.

Die der vorliegenden Erfindung zugrunde liegende Idee besteht darin, bei der Herstellung eines Verbindungselements ein thermoplastisches Polymer in einem ungehärteten Epoxidharz, welches zum Herstellen des Verbundbauteils verwendet wird, teilweise zu lösen, insbesondere in einem Kontaktbereich mit dem ungehärteten Epoxidharz, welcher beispielsweise eine Dicke vom Kontakt mit dem Epoxidharz in das thermoplastische Polymer hinein in einem Bereich von 5 µm bis 100 µm, z.B. 10 µm bis 80 µm, aufweisen kann, wobei eine Schmelztemperatur und eine Glasübergangstemperatur des thermoplastischen Polymers oberhalb der Aushärtetemperatur des Epoxidharzes liegt. Ein teilweises Lösen kann hierbei beispielsweise dadurch bewerkstelligt werden, dass zunächst durch eine Temperaturerhöhung das thermoplastische Polymer im Kontaktbereich mit dem ungehärteten Epoxidharz gelöst wird und die Temperatur dann vor einem vollständigen Lösen des thermoplastischen Polymers im Epoxidharz auf eine Temperatur der Härtungstemperatur oder mehr des Epoxidharzes erhöht wird, um das Epoxidharz auszuhärten. Hierbei können neben den Zeiten der Temperatursteigerung beispielsweise das verwendete Epoxidharz und/oder das verwendete thermoplastische Polymer einen Einfluss auf die Lösung des thermoplastischen Polymers im ungehärteten Epoxidharz haben. Daneben kann auch die Menge an Epoxidharz und/oder des thermoplastischen Polymers einen Einfluss haben, und es können alternativ oder zusätzlich auch Maßnahmen getroffen werden, um ein vollständiges Lösen des thermoplastischen Polymers zu verhindern, wie etwa ein Kühlen der dem Epoxidharz abgewandten Seite des thermoplastischen Polymers auf eine Temperatur, bei der sich dieses im Epoxidharz nicht löst. Die entsprechenden Heiztemperaturen und/oder -zeiten können geeignet, beispielsweise abhängig vom verwendeten Epoxidharz und/oder thermoplastischen Polymer, eingestellt werden.

Die Schmelztemperatur kann hierbei beispielsweise geeignet bestimmt werden, beispielsweise kaloriemetrisch, z.B. mittels dynamischer Differenzkalorimetrie (differential scanning calorimetry, DSC). Ebenso kann die Glasübergangstemperatur geeignet bestimmt werden, z.B. mittels dynamischer Differenzkalorimetrie.

Es handelt sich bei dem thermoplastischen Polymer insbesondere um ein sogenanntes Hochtemperatur-Thermoplast bzw. Hochleistungsthermoplast. Vorzugsweise liegt die Glasübergangstemperatur oder zumindest eine Schmelztemperatur des thermoplastischen Polymers dabei oberhalb der maximalen Einsatztemperatur (Degradationstemperatur) des Epoxidharzes im ausgehärteten Zustand. Insbesondere durch Verwendung eines thermoplastischen Polymers mit einer Glasübergangstemperatur, insbesondere einer ersten Glasübergangstemperatur bei Polymeren mit mehreren Glasübergangstemperaturen, kann eine geeignete Anbindung des Epoxidharzes an das thermoplastische Polymer erfolgen.

Die der Erfindung zugrunde liegende Erkenntnis liegt darin, dass bei Temperaturen ab 150°C ein Lösungsprozess eines thermoplastische Polymers, insbesondere Hochtemperatur-Thermoplast, im Epoxidharz stattfindet, wobei sich das thermoplastische Polymer in dem ungehärteten Epoxidharz vor und/oder während dessen Aushärtens löst. Durch Diffusion entsteht dabei eine Zwischenschicht, insbesondere mit endlicher Dicke, welche sowohl das thermoplastische Polymer als auch das Epoxidharz enthält.

Insbesondere fällt das gelöste erste thermoplastische Polymer beim Aushärten des Epoxidharzes wieder aus, sodass eine strukturelle Verbindung des ausgefallenen thermoplastischen Polymers und des gehärteten Epoxidharzes entsteht. Somit wird bei dem Aushärten des Epoxidharzes eine feste Zwischenschicht hergestellt, welche auch als Interphase oder Durchmischungsphase bzw. Durchmischungsschicht bezeichnet werden kann und eine Dicke größer Null aufweist.

Nach dem Aushärten bilden das thermoplastische Polymer und das gehärtete Epoxidharz in der Zwischenschicht einen Verbund, insbesondere festen und strukturell stabilen Verbund. Vorteilhaft ist die Zwischenschicht daher mechanisch hoch belastbar. Die mechanische Belastbarkeit beruht dabei nicht nur auf Adhäsionseffekten. Vielmehr wird vorteilhaft der strukturelle Verbund durch ein Ineinandergreifen, insbesondere in Form einer physischen Vernetzung bzw. eines Formschlusses, des thermoplastischen Polymers mit dem gehärteten Epoxidharz geschaffen.

Ferner ist durch die Verbindung des thermoplastischen Polymers mit dem gehärteten Epoxidharz vorteilhaft ein schweißbarer Abschnitt des Verbindungselements geschaffen.

Die maximale Aushärtetemperatur des ungehärteten Epoxidharzes liegt bei 180°C. Innerhalb eines Prozesstemperaturfensters von beispielsweise mindestens 100 °C, bevorzugt mindestens 120 °C, insbesondere mindestens 150 °C und maximal 180 °C löst sich somit das erste thermoplastische Polymer in dem Epoxidharz, während das Epoxidharz langsam aushärtet. Aufgrund dessen, dass die Schmelztemperatur und der Glasübergang des thermoplastischen Polymers oberhalb der Aushärtetemperatur des Epoxidharzes liegt, kommt es dabei insbesondere nicht zu einem Schmelzen des thermoplastischen Polymers. Vielmehr handelt es sich vorwiegend um einen Lösungsprozess.

Zur Herstellung des Verbindungselements wird die erste Schicht, beispielsweise in Form einer thermoplastischen Folie, vor dem Aushärten auf das Rohverbundbauteil, welches das Epoxidharz in einem unausgehärteten Zustand aufweist, aufgebracht.

Die erste Schicht umfasst zumindest das erste thermoplastische Polymer. Weitere Stoffe, beispielsweise weitere Polymere, insbesondere weitere thermoplastische Polymere, können in der ersten Schicht mit enthalten sein. Es ist allerdings auch möglich, dass die erste Schicht, bis auf etwaige technisch begründete Verunreinigungen, vollständig aus dem ersten Polymer besteht.

Das Verbundbauteil umfasst zumindest ein gehärtetes Epoxidharz. Weitere Stoffe wie beispielsweise weitere Epoxidharze können mit enthalten sein. Unter dem Verbundbauteil ist dabei ein Bauteil zu verstehen, welches zusätzlich zu dem Epoxidharz weitere Werkstoffe enthalten kann oder über das Epoxidharz mit weiteren Werkstoffen verbunden ist. Insbesondere enthält das Verbundbauteil gemäß bestimmten Ausführungsformen Fasern, beispielsweise Kohlenstofffasern, Basaltfasern oder Glasfasern, insbesondere Kohlenstofffasern.

Zum Herstellen einer Verbindungsanordnung mit einem mit dem Verbindungselement zu verbindenden Bauteil wird dieses mittels Reibschweißen an der thermoplastischen Schicht angeschweißt. Insbesondere wird dazu Vibrationsreibschweißen, vorzugsweise zirkulares Vibrationsreibschweißen, eingesetzt.

Ein besondere Effekt des Einsatzes eines derartigen Schweißverfahrens an dem erfindungsgemäßen Verbindungselement liegt darin, dass damit Energie ausschließlich an der zu schweißenden (ersten und/oder zweiten) thermoplastischen Schicht in das Verbindungselement eingebracht wird. Es findet daher kein direkter Energieeintrag in das Verbundbauteil statt. Das Verbundbauteil wird lediglich in reduziertem Maße durch Wärmeleitung von der thermoplastischen Schicht in das Verbundbauteil erwärmt. Somit wird erreicht, dass an der ersten Schicht zwar die zum Schweißen vorteilhafte Schmelztemperatur des ersten thermoplastischen Polymers erreicht wird, welche beispielsweise oberhalb der maximale Einsatztemperatur des Epoxidharzes liegt. Jedoch wird insbesondere unter Wärmeleitung von der ersten Schicht in das Verbundbauteil im Bereich des Verbundbauteils eine maximale Einsatztemperatur des gehärteten Epoxidharzes nicht oder nur in einem unschädlichen Maße erreicht bzw. überschritten. Ein unschädliches Maß einer Überschreitung liegt dabei beispielsweise in einem geringen Temperaturbereich der Überschreitung und/oder bei sehr kurzer Dauer der Überschreitung, wobei die Schädlichkeit auch von dem Zusammenwirken der Dauer und des Temperaturbereichs der Überschreitung abhängig sein kann.

Somit kann eine vollständige bzw. durchgehende Verschweißung geschaffen werden, ohne das Epoxidharz durch einen zu hohen Wärmeeintrag zu beschädigen oder zu schwächen. Daher ist eine für die besondere Struktur des Verbindungselements hinsichtlich des Herstellungsprozesses und der Materialeigenschaften geeignete und dabei insbesondere durchgehend ausbildbare Schweißverbindung geschaffen.

Erfindungsgemäß ist dadurch eine Verbindungsanordnung geschaffen, welche die Festigkeitseigenschaften des Epoxidharzes bzw. des Verbundbauteils über dessen gesamten Einsatztemperaturbereich erhält. Vorteilhaft bestimmt so nach wie vor im Wesentlichen das Verbundbauteil und dessen Epoxidharz die temperaturabhängige Belastbarkeit der Verbindungsanordnung, und nicht das thermoplastische Polymer. Im Vergleich zu dem reinen Verbundbauteil bleibt daher der Einsatzbereich des Verbundbauteils vorteilhaft, insbesondere vollumfänglich, erhalten.

Die Reibschweißverbindung der Verbindungsanordnung ist von außen durch den beim Reibschweißen typischerweise entstehenden Reibschweißaustrieb erkennbar. Der Reibschweißaustrieb bringt zudem technologische Vorteile mit sich. Zum einen werden zusammen mit dem Reibschweißaustrieb auch Verunreinigungen mit ausgetrieben. Eine Vorreinigung der zu verschweißenden Oberflächen der thermoplastischen (ersten) Schicht und des zu verbindenden Bauteils ist somit nicht notwendig. Des Weiteren werden durch den Reibschweißaustrieb auch etwaige Unebenheiten der zu verschweißenden Oberflächen ausgeglichen, sodass eine durchgehende Schweißverbindung sichergestellt ist. Die thermoplastische (erste) Schicht weist daher eine Dicke auf, die einen Abtrag des zum Verschweißen benötigten Reibschweißaustriebs, welcher zumindest teilweise das thermoplastische Material enthält, zulässt.

Die erfindungsgemäße Verbindungsanordnung und das erfindungsgemäße Verfahren zum Herstellen einer Verbindungsanordnung weisen daher gegenüber ansonsten für Verbindungsanordungen mit Verbundbauteilen üblichen Klebeverbindungen mehrere Vorteile auf. Beispielsweise können erfindungsgemäß die Fertigungszeiten im Vergleich zu Klebeprozessen enorm verkürzt werden. Für die Anbindung an Verbundbauteile geeignete Klebeprozesse dauern aufgrund der benötigten Aushärtezeiten in der Regel acht bis zwölf Stunden. Das erfindungsgemäße Reibschweißen dauert beispielsweise nur etwa 10 Sekunden. Zudem wird eine robotergestützte Montage ermöglicht, was eine besonders positionsgenaue Montage sicherstellt. Des Weiteren weisen relevante Klebstoffe auch bei Temperaturen über 100°C unter feuchtwarmen Bedingungen einen deutlichen Festigkeitseinbruch auf, welcher bei der erfindungsgemäßen Schweißverbindung mit Hochtemperaturthermoplasten vermieden wird.

In den Unteransprüchen finden sich vorteilhafte Ausgestaltungen und Verbesserungen der Erfindung.

Gemäß einer bevorzugten Ausführungsform eines Verbindungselements ist die erste Schicht außen an dem Verbundbauteil vorgesehen. Somit kann ein weiteres Bauteil außen an die erste Schicht, welche das erste thermoplastische Polymer umfasst, angeschweißt werden.

Gemäß einer Ausführungsform besteht die erste Schicht aus dem ersten thermoplastischen Polymer. Somit ist diese vorteilhaft zuverlässig in dem Epoxidharz lösbar und nach dem Aushärten schweißbar.

Das thermoplastische Polymer weist eine Glasübergangstemperatur höher als 185 °C auf. Insbesondere ist die Schmelztemperatur, insbesondere Glasübergangstemperatur, höher als 200 °C. Vorteilhaft liegt die Glasübergangstemperatur des thermoplastischen Polymer so oberhalb der Aushärtetemperatur und auch oberhalb der für längere Zeit möglichen Einsatztemperaturen des Epoxidharzes. Somit wird der Einsatzbereich des Verbindungselements im Vergleich zu dem Verbundbauteil vorteilhaft nicht beschränkt. Insbesondere liegt dabei ferner eine Schmelztemperatur des ersten Polymers oberhalb einer für kurze Zeit maximal möglichen Einsatztemperatur des Epoxidharzes.

Gemäß einer vorteilhaften Ausführungsform ist das erste thermoplastische Polymer ausgewählt aus mindestens einem aus einer Gruppe, bestehend aus Polyetherimid, Polysulfon, Polyphenylsulfon, Polyhydroxyether (z. B. Phenoxy) und Polycarbonat. Für diese Werkstoffe ist insbesondere eine geeignete mechanische Stabilität der Zwischenschicht, insbesondere eine hohe interlaminare Energiefreisetzungsrate, erreichbar. Beispielsweise kann die Güte der Verbindung, welche bei Verbundwerkstoffen in sogenannten "G1c"-Werten ausgedrückt wird, mit einer Messung der Mode 1 interlaminaren Energiefreisetzungsrate (G1c-Test) überprüft werden. Auch kann mit diesen Polymeren eine gute Kompatibilität mit dem Epoxidharz des Verbundbauteils gewährleistet werden.

Besonders bevorzugt ist als erstes thermoplastisches Polymer Polyhydroxyether und/oder Polyetherimid (PEI), insbesondere Polyetherimid. Hiermit können zum einen beim G1c-Test die höchsten Energiefreisetzungsraten erzielt werden, was für eine hohe mechanische Belastbarkeit und Güte der Verbindung des Verbundbauteils mit der ersten Schicht durch die Zwischenschicht spricht. Zum anderen können Polyetherimide auch eine geeignet hohe Schmelz- bzw. Glasübergangstemperatur, insbesondere nach ISO 11357, beispielsweise von 217 °C, aufweisen. Polyetherimide stellen somit ein Hochtemperatur-Thermoplast dar, welche eine Glasübergangstemperatur deutlich oberhalb der maximalen Aushärtetemperatur von Epoxidharz (bis zu 180°C) aufweist können.

Die anderen Werkstoffe der Gruppe sind aber ebenfalls einsetzbar. Beispielsweise können Polyphenylsulfone (PPSU) eine Schmelz- bzw. Glasübergangstemperatur nach ISO 11357 von 215°C aufweisen. Eine Glasübergangstemperatur von Polysulfonen (PSU) kann beispielsweise bei 190°C liegen. Ferner werden auch damit beim G1c Test Energiefreisetzungsraten erreicht, die oberhalb des Wertes des reinen Epoxidharzes liegen.

Darüber hinaus ist auch eine Ausbildung mit weiteren thermoplastischen Polymeren möglich, wobei allerdings gegebenenfalls mit dem G1c-Test geringere Energiefreisetzungsraten als bei reinem Epoxidharz erzielt werden können. So können beispielsweise auch Polyethersulfone, Polyphenylensulfone und/oder Polyamide als erstes thermoplastisches Polymer infrage kommen. Diese können sich ebenfalls in dem Epoxidharz lösen, sodass sich eine Zwischenschicht bildet. Allerdings kann diese Zwischenschicht dann gemäß bestimmten Ausführungsformen eine geringere Festigkeit aufweisen. Sie können daher beispielsweise zum Einsatz kommen, wenn eine bei einer Anwendung auch eine im Vergleich zum Epoxidharz geringere Bruchzähigkeit der Zwischenphase ausreichend ist. Denkbar ist dabei z.B. ein Einsatz als Sollbruchstelle, beispielsweise um im Versagensfall das nur schwierig zu reparierende Fasermaterial des Verbundbauteils zu schützen.

Gemäß bestimmten Ausführungsformen weist die erste Schicht eine Dicke in einem Bereich von größer als 50 µm bis kleiner oder gleich 300 µm auf. Bei einer vorteilhaften Ausführungsform weist die erste Schicht eine Dicke in einem Bereich von 100 µm bis 150 µm, auf. Derartige Schichtdicken stellen einen ausreichenden Materialvorrat für das Reibschweißen bzw. den dabei entstehenden Reibschweißaustrieb dar, wobei gleichzeitig der Materialeinsatz und damit das Gewicht des Verbindungselements minimiert werden.

Gemäß bestimmten Ausführungsformen weist das Verbundbauteil einen faserverstärkten Kunststoff, insbesondere einen kohlenstofffaserverstärkten Kunststoff, auf. Alternativ oder zusätzlich kann das Verbundbauteil auch eine Sandwichstruktur mit faserverstärkter Kunststoffdeckschicht, insbesondere kohlenstofffaserverstärkter Kunststoffdeckschicht, aufweisen. Vorteilhaft ist es somit mittels des Verbindungselement ermöglicht, an einem faserverstärkten Kunststoff bzw. kohlenstofffaserverstärkten Kunststoff mit Epoxidharzmatrix ein weiteres Bauteil anzuschweißen.

Gemäß bestimmten Ausführungsformen ist auf der ersten Schicht eine zweite Schicht angeordnet. Die zweite Schicht umfasst ein zweites thermoplastisches Polymer, welches nicht besonders beschränkt ist, insbesondere ein Polyetheretherketon. Alternativ oder zusätzlich können auch Polyethersulfone, Polyphenylensulfone und/oder Polyamide in der zweiten Schicht umfasst sein. Bei einer Weiterbildung besteht die zweite Schicht aus einem zweiten thermoplastischen Polymer, insbesondere Polyetheretherketon , Polyethersulfon, Polyphenylensulfon und/oder Polyamid. Vorteilhaft können mittels der zweiten Schicht unterschiedliche zusätzliche oder optimierte Eigenschaften des Verbindungselements realisiert werden. Die zweite Schicht kann beispielsweise vorgesehen sein, um die chemische Beständigkeit des Verbindungselements zu verbessern. Dies ist insbesondere dann vorteilhaft, wenn das zweite thermoplastischen Polymer der zweiten Schicht sich selbst nicht in dem Epoxidharz löst. Die erste Schicht mit dem ersten thermoplastischen Polymer kann somit als Haftvermittler zwischen dem Epoxid Harz und der zweiten Schicht wirken. Des Weiteren kann die zweite Schicht mit dem zweiten thermoplastischen Polymer auch zum Herstellen einer Kompatibilität beim Anschweißen und/oder zum Verbessern von Schweißeigenschaften vorgesehen sein. Beispielsweise ist dies bei mit der ersten Schicht nicht kompatiblen Werkstoffen eines Bauteils vorteilhaft. Ferner kann so beispielsweise auch eine gewünschte Viskosität einer Schmelze oder eine angepasste Schmelztemperatur eingestellt werden.

Gemäß einer Ausführungsform weist die Zwischenschicht eine Dicke in einem Bereich von 20 µm bis 100 µm auf. Insbesondere kann die Dicke der Zwischenschicht von 30 µm bis 80 µm betragen. Die Dicke der Zwischenschicht kann insbesondere von dem Zeitanteil des Aushärtungszyklus, bei welchem eine Temperatur von 100 °C und mehr, bevorzugt mindestens 120 °C, insbesondere mindestens 150°C vorliegt, abhängen. Je länger die Zeit ist, desto mehr Lösen und Diffusion kann stattfinden, was die Dicke der Zwischenschicht tendenziell erhöht. Eine maximale Schichtdicke ist erreicht, wenn das Epoxidharz zu gelieren beginnt, sodass keine oder eine vernachlässigbare Diffusion stattfindet.

Ferner weist die Zwischenschicht optional oder zusätzlich einen kontinuierlichen Konzentrationsübergang von dem Epoxidharz zu dem ersten thermoplastischen Polymer auf. Dies schafft vorteilhaft einen sanften Übergang der Werkstoffe, insbesondere ohne Steifigkeitssprünge. Als kontinuierlicher Konzentrationsübergang ist hierbei eine stetige Abnahme der Konzentration des Epoxidharzes vom Verbundbauteil zur ersten Schicht hin innerhalb der Zwischenschicht zu verstehen, wobei dieser beispielsweise schrittweise oder graduell oder auch anders geartet sein kann.

Das Epoxidharz erstreckt sich ausgehend von dem Verbundbauteil in Richtung zu der ersten Schicht in Form einer Vielzahl von aneinander angrenzenden Volumenabschnitte in die Zwischenschicht. Alternativ oder zusätzlich können die Volumenabschnitte, zumindest teilweise, miteinander verbunden sein, so dass also die einzelnen Volumenabschnitte nicht isoliert vorliegen. Insbesondere können die Volumenabschnitte dabei blasenförmig, z. B als Kugelstrukturen, ausgebildet sein. Durch das aneinander Angrenzen bzw. miteinander in verbundenem Kontakt Stehen der Volumenabschnitte können sich diese vernetzen und/oder hinterschneiden das thermoplastische Polymer. Insbesondere befindet sich das Epoxidharz im mikroskopischen Maßstab, also beispielsweise im Bereich von 0,1 bis 100 µm, lokal daher auch mechanisch in Eingriff mit dem thermoplastischen Polymer.

Die Volumenabschnitte weisen in einem an das Verbundbauteil angrenzenden Bereich der Zwischenschicht einen größeren Durchmesser (beispielsweise zu verstehen als durchschnittliche Schnittlänge durch den Volumenabschnitt) auf als in einem an die erste Schicht angrenzenden Bereich der Zwischenschicht. Alternativ oder zusätzlich können die Volumenabschnitte in einem an das Verbundbauteil angrenzenden Bereich der Zwischenschicht ein größeres Volumen aufweisen als in einem an die erste Schicht angrenzenden Bereich der Zwischenschicht. Im Falle von blasenförmigen Volumenabschnitten, beispielsweise Kugeln, geht ein größerer Durchmesser gewöhnlich mit einem größeren Volumen einher. Dies ist jedoch nicht notwendigerweise der Fall, da die Volumenabschnitte zumindest teilweise auch von einer Blasenform, insbesondere von einer Kugelform, abweichende Formen aufweisen können. Beispielsweise können die Volumenabschnitte teilweise auch schlauchartig gestreckte und/oder elliptische Formen aufweisen. Mittels der unterschiedlichen Größe (Durchmesser und/oder Volumina) der Volumenabschnitte, deren Verteilung über die Dicke der Zwischenschicht hinweg sich vorzugsweise kontinuierlich verändert, wird vorteilhaft ein kontinuierlicher Konzentrationsübergang, wie beispielsweise oben angegeben, und somit ein sanfter und gleichmäßiger Übergang der Werkstoffe ohne Steifigkeitssprünge oder mit geringen Steifigkeitssprüngen bereitgestellt.

Gemäß bestimmten Ausführungsformen ist der Durchmesser der Volumenabschnitte in dem an das Verbundbauteil angrenzenden Bereich der Zwischenschicht größer als 1 µm. Insbesondere kann der Durchmesser von blasenförmigen Volumenabschnitten, beispielsweise Kugeln, in dem an das Verbundbauteil angrenzenden Bereich der Zwischenschicht in einem Bereich von 1 µm bis 20 µm liegen. Somit liegt in diesem Bereich insbesondere eine hohe Konzentration von Epoxidharz vor. Insbesondere wird diese Konzentration ausgehend von dem reinen Epoxidharz in Richtung zu der ersten Schicht kontinuierlich kleiner. In einem an die erste Schicht angrenzenden Bereich der Zwischenschicht ist der Durchmesser der Volumenabschnitte gemäß bestimmten Ausführungsformen kleiner als 1 µm. Insbesondere kann der Durchmesser hier kleiner, insbesondere deutlich kleiner, als 0,1 µm bzw. 100 nm sein. Somit liegt in diesem Bereich insbesondere eine geringe, insbesondere kontinuierlich bis in das reine erste thermoplastische Polymer geringer werdende, Konzentration von Epoxidharz vor.

Gemäß einer Ausführungsform des Verfahrens zum Herstellen einer Verbindungsanordnung wird das Reibschweißen in Form von Vibrationsreibschweißen durchgeführt wird. Bevorzugt handelt es sich dabei um zirkulares Vibrationsreibschweißen.

Die obigen Ausgestaltungen und Weiterbildungen lassen sich, sofern sinnvoll, beliebig miteinander kombinieren. Insbesondere sind sämtliche Merkmale des Verbindungselements auf das Verfahren zum Herstellen des Verbindungselements übertragbar. Ferner sind sämtliche Merkmale des Verbindungselements auf die Verbindungsanordnung und das Verfahren zum Herstellen der Verbindungsanordnung übertragbar.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt.

Von den Figuren zeigen:
- Fig. 1: eine schematische Skizze der Struktur einer Verbindung eines Verbundbauteils mit einer thermoplastischen Schicht mit der Zwischenschicht / Durchmischungszone von Thermoplast und Epoxid, nach der Aushärtung;
- Fig. 2A: eine Rasterelektronenmikroskop-Aufnahme eines geätzten Querschliffs einer Durchmischungszone;
- Fig. 2B: eine vergrößerte Ansicht des Querschliffs gemäß Fig. 2A im Bereich der Zwischenschicht;
- Fig. 2C: eine nochmals vergrößerte Ansicht des Querschliffs gemäß Fig. 2B;
- Fig. 3A: ein FTIR-Spektrum eines beispielhaften Epoxidharzes;
- Fig. 3B: ein FTIR-Spektrum einer beispielhaften Zwischenschicht;
- Fig. 3C: ein FTIR-Spektrum eines beispielhaften ersten thermoplastischen Polymers;
- Fig. 4A: eine schematische perspektivische Ansicht eines Rohverbundbauteils und einer ersten Schicht;
- Fig. 4B: eine schematische perspektivische Ansicht eines beispielhaften erfindungsgemäßen Verbindungselements, z. B. eines Thermoplast / EP(Epoxidharz)-CFK Verbundes;
- Fig. 5: ein beispielhafter Druck- und Temperaturzyklus zum Herstellen eines Verbindungselements in einem Autoklaven;
- Fig. 6: eine perspektivische Darstellung einer beispielhaften Verbindungsanordnung;
- Fig. 7: eine schematische Darstellung des Bewegungsablaufs eines Bauteils beim zirkularen Vibrationsreibschweißen;
- Fig. 8: eine schematische Seitenansicht einer beispielhaften Verbindungsanordnung;
- Fig. 9: ein Temperaturverlauf über der Zeit während des zirkularen Vibrationsreibschweißens eines Bauteils an das Verbindungselement.;
- Fig. 10: eine Lichtmikroskopaufnahme eines geätzten Querschliffs einer beispielhaften Verbindungsanordnung;
- Fig. 11: eine schematische Darstellung eines beispielhaften Verbindungselements mit einer ersten und einer zweiten Schicht;
- Fig. 12A: eine schematische Ansicht zweier zu verbindender Verbindungselemente gemäß Fig. 11; und
- Fig. 12 B: die Verbindungselemente gemäß Fig. 12A in einem verbundenen Zustand.

In den Figuren bezeichnen dieselben Bezugszeichen gleiche oder funktionsgleiche Komponenten, soweit nichts Gegenteiliges angegeben ist.

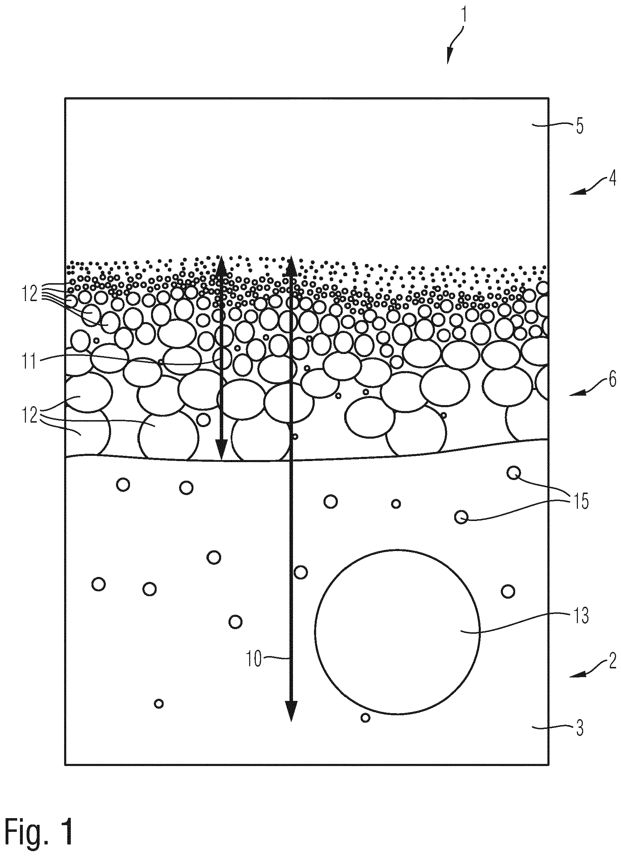

Fig. 1 zeigt eine schematische Skizze der Struktur einer Verbindung eines Verbundbauteils mit einer thermoplastischen Schicht mit der Zwischenschicht / Durchmischungszone von Thermoplast und Epoxid, nach der Aushärtung.

Das Verbindungselement 1 weist ein Verbundbauteil 2, eine erste Schicht 4 und eine Zwischenschicht 6 auf.

Das Verbundbauteil 2 umfasst ein gehärtetes Epoxidharz 3 sowie einen weiteren Werkstoff 13. Bei den weiteren Werkstoff 13 kann es sich beispielsweise um Kohlenstofffasern handeln. In diesem Fall stellt das Verbundbauteil ein kohlenstofffaserverstärktes Kunststoffbauteil dar.

Die erste Schicht 4 umfasst ein erstes thermoplastisches Polymer5 mit einer Schmelztemperatur oberhalb der Aushärtungstemperatur des Epoxidharzes 3. Insbesondere enthält die erste Schicht 4 als erstes thermoplastisches Polymer 5 ein Polyetherimid. Alternativ oder zusätzlich kann die erste Schicht beispielsweise auch Polysulfon, Polyphenylsulfon, Polyhydroxyether und/oder Polycarbonat enthalten. Bei einer bevorzugten Ausführungsform besteht die erste Schicht 4, zumindest überwiegend, aus Polyetherimid.

Die Zwischenschicht 6 ist zwischen dem Verbundbauteil 2 und der ersten Schicht 4 angeordnet. Sie enthält sowohl das gehärtete Epoxidharz 3 des Verbundbauteils 2 wie auch das erste thermoplastische Polymer 5 der ersten Schicht 4.

Die Zwischenschicht 6 weist eine messbare Dicke 11 und einen kontinuierlichen Konzentrationsübergang von dem Epoxidharz 3 zu dem ersten thermoplastischen Polymer 5 auf. Dieser kontinuierliche Konzentrationsübergang ist dadurch realisiert, dass sich das Epoxidharz 3 ausgehend von dem Verbundbauteil 2 in Richtung zu der ersten Schicht 4 in Form einer Vielzahl von aneinander angrenzenden und teilweise miteinander verbundenen Volumenabschnitten 12 in die Zwischenschicht6 erstreckt. Die Volumenabschnitte 12 weisen dabei in einem an das Verbundbauteil 2 angrenzenden Bereich der Zwischenschicht 6 einen größeren Durchmesser und ein größeres Volumen auf als in einem an die erste Schicht 4 angrenzenden Bereich der Zwischenschicht 6.

In das Epoxidharz 3 des Verbundbauteil 2 sind zudem beispielhaft kleine Bläschen 15 mit thermoplastische Material eindiffundiert vorgesehen. Es kann sich daher eine Dicke 10 des gesamten Konzentrationsübergangs ergeben, welche größer als die Dicke der mit den Volumenabschnitten 12 gebildeten Zwischenschicht 6 ist.

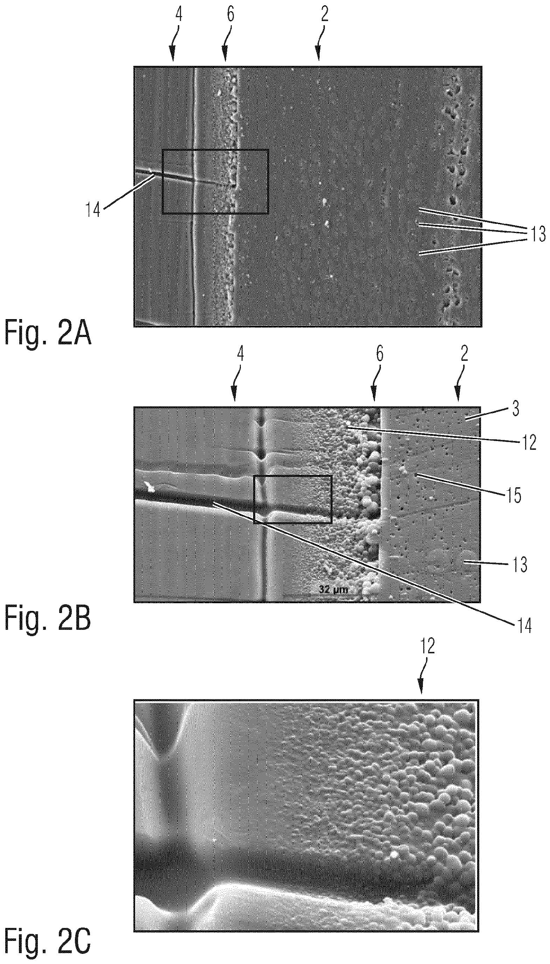

Fig. 2A zeigt eine Rasterelektronenmikroskop-Aufnahme eines geätzten Querschliffs eines beispielhaften Verbindungselements 1.

Zum Herstellen der so präparierten Probe wurde eine entsprechende Probe zunächst geschliffen und poliert: Für das Ätzen der Probe wurde ein beständiges, fusselfreies Tuch mit DCM (Dichlormethan) getränkt und damit ein- bis zweimal über die polierte Probe gewischt. Ein in der Mikroskopaufnahme erkennbarer Riss 14 ist durch das Ätzen entstanden (Artefakt).

Erkennbar ist hier zwischen dem Verbundbauteil 2 und der ersten Schicht 4 die Zwischenschicht 6 ausgebildet.

Das Verbundbauteil ist ferner erkennbar mit einer Vielzahl von Kohlenstofffasern 13 durchsetzt.

Fig. 2B zeigt eine vergrößerte Ansicht des Querschliffs gemäß Fig. 2 im Bereich der Zwischenschicht 6.

Gut erkennbar ist hier in der Zwischenschicht 6 die Verteilung der verschieden großen blasenförmigen Volumenabschnitte 12 mit größeren Durchmessern in einem an das Verbundbauteil 2 angrenzenden Bereich der Zwischenschicht 6 und kleineren Durchmessern in einem an die erste Schicht 4 angrenzenden Bereich der Zwischenschicht 6. Die größeren Durchmesser liegen dabei in einem Bereich zwischen 1 µm und 20 µm, wobei die kleineren Durchmesser unterhalb von 1 µm liegen.

Zudem sind hier auch die in das Epoxidharz 3 diffundierten thermoplastischen Bläschen 15, welche einen Durchmesser im Mikrometerbereich aufweisen, und die in dem Epoxidharz 3 enthaltenen Kohlenstofffasern 13 sichtbar.

Fig. 2C zeigt eine nochmals vergrößerte Ansicht des Querschliffs gemäß Fig. 2. Diese vergrößerte Ansicht zeigt den Auslauf der Zwischenschicht 6 in einem an die erste Schicht 4 angrenzenden Bereich.

Dargestellt sind die bläschenartigen Volumenabschnitte 12, welche in dem am rechten Bildrand dargestellten Bereich, der etwa in der Mitte der Zwischenschicht liegt, Durchmesser kleiner als 1 µm aufweisen. In der Mitte des dargestellten Ausschnitts sind die Durchmesser bereits kleiner als 0,1 µm bzw. 100 n. Die Größe der Volumenabschnitte wird hin zur ersten Schicht 4 kontinuierlich immer noch kleiner und letztlich an der linken Hälfte des dargestellten Ausschnitts bis an die Auflösbarkeitsgrenze des Rasterelektronenmikroskops klein ausgebildet. Insbesondere können sich die Volumenabschnitte in einem nicht mehr darstellbaren Bereich bis hin zu einzelnen Molekülen des Epoxidharzes verkleinern.

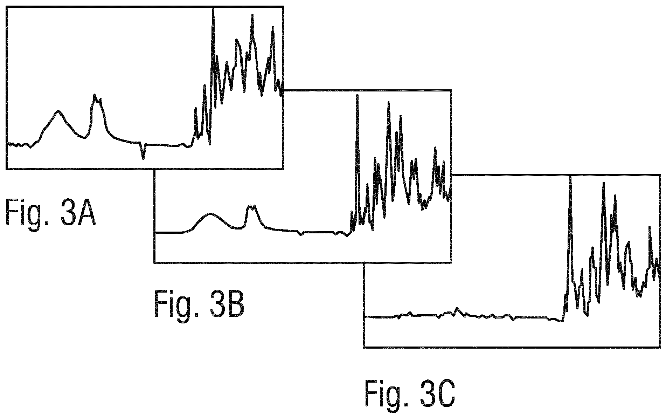

Fig. 3A zeigt ein FTIR-Spektrum eines beispielhaften Epoxidharzes. Das Spektrum ist mit einem FT-IR Mikroskop aufgenommen, welches für die Spektralanalyse geeignet ist.

Charakteristisch für das Spektrum des Epoxidharzes sind hier die beiden auf der linken Seite des Diagramms dargestellten, relativ breiten Gipfel (Peaks) des Spektrums (OH-Banden).

Fig. 3C zeigt ein FT-IR Spektrum eines beispielhaften ersten thermoplastischen Polymers. Dieses Spektrum weist auf der linken Seite des Diagramms keine Gipfel auf, jedoch auf der rechten Seite drei charakteristische Spitzen (bei ca.1700 cm⁻¹).

Fig. 3B zeigt ein FT-IR Spektrum einer beispielhaften Zwischenschicht. Das hier ermittelte Spektrum weist sowohl die beiden Gipfel gemäß der linken Seite des Diagramms aus Fig. 3A des Epoxidharzes als auch die drei Spitzen gemäß der rechten Seite des Diagramms aus Fig. 3C des thermoplastischen Polymers auf. In der Zwischenschicht liegen somit nachweislich sowohl das Epoxidharz als auch das thermoplastische Polymer vor.

Bei Vorversuchen wurden mittels eines G1c-Tests unterschiedliche thermoplastische Polymere in der ersten Schicht evaluiert. Hierbei ergaben sich die folgenden vorteilhaften Polymere: Polyetherimid, Polysulfon, Polyphenylsulfon, Polyhydroxyether und Polycarbonat.

Beim sogenannten G1c-Test wird die Mode 1 Energiefreisetzungsrate (G1c) bzw. die für ein Weiterreißen notwendige Energie [J/m²] an einer präparierten Probe gemessen, beispielsweise gemäß ASTM D 5528 - 01 oder DIN EN 6033. Eine prozentuale Variation ΔG1c der Energiefreisetzungsrate für Proben mit unterschiedlichen thermoplastischen Polymeren der ersten Schicht kann beispielsweise auf ein unmodifiziertes CFK Material referenziert werden (0% Variation).

Als Resultat der Untersuchung ist bei bevorzugten Ausführungsformen das erste thermoplastisches Polymer ausgewählt aus mindestens einem aus einer Gruppe, bestehend aus Polyetherimid, Polysulfon, Polyphenylsulfon, Polyhydroxyether und Polycarbonat. Für diese Werkstoffe ist die Energiefreisetzungsrate der Zwischenschicht mittels des G1c-Tests nachweisbar gegenüber dem unmodifizierten CFK erhöht.

Besonders bevorzugt ist als das erste thermoplastische Polymer Polyetherimid (PEI) einsetzbar. Mit diesem werden zum einen beim G1c-Test die höchsten Energiefreisetzungsraten erzielt, was für eine hohe mechanische Belastbarkeit und Güte der Verbindung des Verbundbauteils mit der ersten Schicht durch die Zwischenschicht spricht. Zum anderen weist Polyetherimid üblicherweise eine hohe Schmelz- bzw. Glasübergangstemperatur, z.B. insbesondere nach ISO 11357 von 217 °C, auf. Polyetherimide stellen somit ein in dem Epoxidharz lösbares Hochtemperatur-Thermoplast dar.

Über die genannte Gruppe hinaus ist auch eine Ausbildung der ersten Schicht mit weiteren thermoplastischen Polymeren möglich, wobei allerdings mit dem G1c Versuch messbar geringere Energiefreisetzungsraten erzielt werden. So kommen beispielsweise auch Polyethersulfon, Polyphenylensulfon und/oder Polyamid als erstes thermoplastisches Polymer infrage.

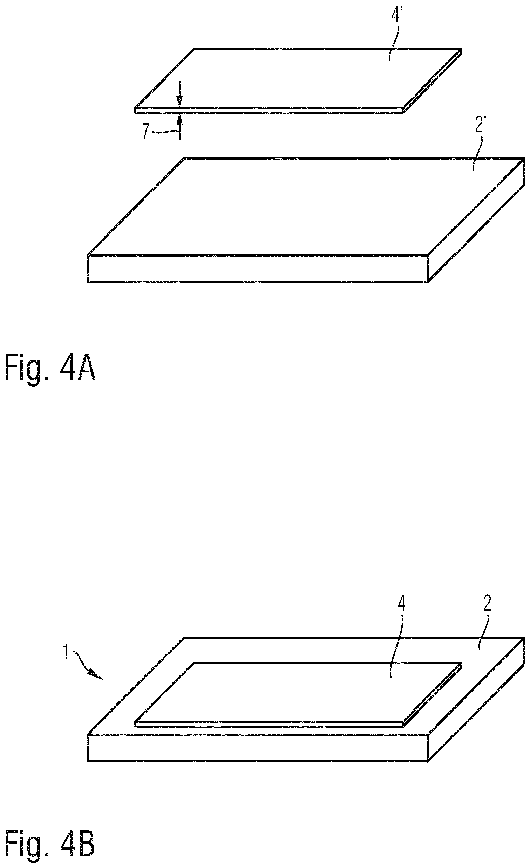

Fig. 4A zeigt eine schematische perspektivische Ansicht eines Rohverbundbauteils 2' und einer ersten Schicht 4'.

Die erste Schicht 4' ist beispielsweise als eine Polyetherimid-Schicht mit einer Dicke 7 in einem Bereich von größer als 50 µm bis kleiner oder gleich 300 µm, vorzugsweise im Bereich zwischen 100 µm und 150 µm, ausgebildet. In dem dargestellten Zustand ist die erste Schicht 4' noch nicht auf das Rohverbundbauteil 2' aufgebracht.

Das Rohverbundbauteil 2' umfasst beispielsweise ein Kohlenstofffasergelege und ein ungehärtetes Epoxidharz.

Zum Herstellen des Verbindungselements 1 wird die erste Schicht 4' außen auf das Rohverbundbauteil 2' aufgebracht. Anschließend wird das Rohverbundbauteil 2', zumindest zeitweise, bei einer Temperatur oberhalb von 150 °C ausgehärtet.

Fig. 4B zeigt eine schematische perspektivische Ansicht eines Verbindungselements 1.

Bei dem Aushärteprozess löst sich das Polyetherimid bei hohen Temperaturen ab 150 °C in dem noch ungehärteten Epoxidharz. Bei vollständigem Aushärten des Epoxidharzes fällt das Polyetherimid dann wieder aus, wobei die hier nicht einzelnen dargestellte Zwischenschicht 6 entsteht. Die erste Schicht 4 ist somit nach dem Aushärten mit dem Verbundbauteil 2 über die Zwischenschicht 6 fest verbunden.

Außen an den Verbundbauteil 2 ist mit der ersten Schicht 4 ein schweißbarer Abschnitt geschaffen, welcher zur Anbindung eines weiteren Werkstoffs oder eines weiteren Bauteils dienen kann.

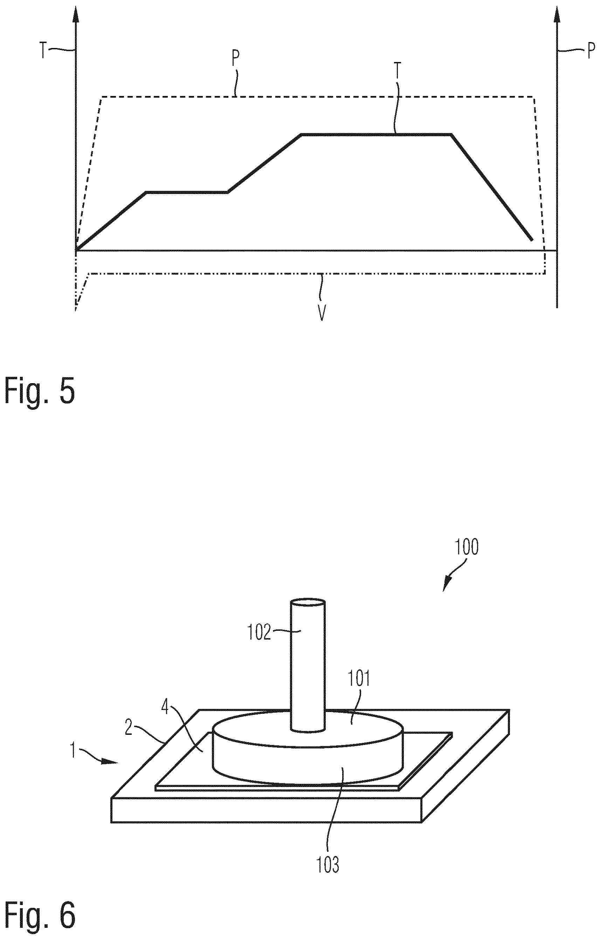

Fig. 5 zeigt einen beispielhaften Druck- und Temperaturzyklus zum Herstellen eines Verbindungselements 1 in einem Autoklaven. Für andere Materialien sind auch autoklavfreie Prozesse möglich (RTM, VAP, etc.).

Es handelt sich dabei um einen rein beispielhaften in einem Druck- und Temperatur-Diagramm dargestellten Zyklus, der üblicherweise zum Aushärten von Rohverbundbauteilen, welche ein Kohlenstofffaser Gelege und ein Epoxidharz enthalten, eingesetzt wird. Bei einem derartigen Zyklus werden in dem Autoklaven teilweise Temperaturen oberhalb von 150 °C gefahren. Bei verschiedenen Materialien können unterschiedlichste andere Zyklen erforderlich sein (Autoklav, RTM, VAP etc.). Teilweise wird der Prozess des Aushärtens auch bauteilspezifisch angepasst.

Zu Beginn des Zyklus wird zunächst in einer gegenüber dem Inneren des Autoklaven dichten Bauteilkavität ein Vakuum erzeugt. Der Verlauf des Vakuums ist mit der Kurve V in dem Diagramm eingezeichnet. Anschließend wird in dem Autoklaven der Druck P, welcher ebenfalls mit einer eigenen Kurve eingezeichnet ist, bis auf einen Betirebsdruck, beispielsweise von 7 bar, gesteigert. Ab einem gewissen Druck P von beispielsweise etwa 1 bar im Autoklaven wird das Vakuum V der Bauteilkavität reduziert, beispielsweise auf 0,2 bar. Parallel zum Erhöhen des Drucks P im Autoklaven wird eine ebenfalls mit einer eigenen Kurve dargestellte Temperatur T mit einem vorbestimmten Zuwachs, beipielsweise von 1 bis 3 °C pro Minute, bis auf eine erste Temperatur, beispielsweise etwa 110 °C, erhöht. Die erste Temperatur wird für eine erste Zeitdauer, beispielsweise etwa 60 Minuten, gehalten. Anschließend wird die Temperatur T weiter mit der Steigerungsrate des vorbestimmten Zuwachses bis auf eine zweite Temperatur, beispielsweise etwa 180 °C, erhöht. Diese zweite Temperatur wird für eine zweite Zeitdauer, beispielsweise ungefähr 120 Minuten, gehalten. Anschließend wird die Temperatur T kontinuierlich mit einer vorbestimmten Abfallrate, beispielsweise um 2 bis 5 °C pro Minute, bis auf eine dritte Temperatur, beispielsweise 60 °C, gesenkt. Zum Abschluss des Zyklus wird der Druck aus dem Autoklaven abgelassen.

Die Temperaturangaben des Zyklus können beispielsweise einer Toleranz von +/-5 °C unterliegen. Die Zeitangaben unterliegen beispielsweise einer Toleranz von +/- 5 Minuten.

Fig. 6 zeigt eine perspektivische Darstellung einer Verbindungsanordnung 100.

Die Verbindungsanordnung 100 enthält das Verbindungselement 1 gemäß Fig. 4B mit dem Verbundbauteil 2 und der damit über eine Zwischenschicht 6 verbundenen ersten Schicht 4, die ein erstes thermoplastisches Polymer, vorzugsweise Polyetherimid, enthält.

Ferner weist die Verbindungsanordnung 100 ein mit dem Verbundbauteil 2 zu verbindendes Bauteil 101 auf. Dabei kann es sich beispielsweise um ein Verbundwerkstoffe-Anbindungsteil handeln. Andere Ausbildungen des Bauteils 101 sind ebenso möglich.

Das Bauteil 101 weist einen Anschlussbereich 102 und einen Fußabschnitt 103 auf. Der Anschlussbereich 102 weist beispielsweise ein Schraubgewinde auf und dient dabei zum Anbinden der Verbindungsanordnung an eine andere Struktur oder Komponente durch Anschrauben. Auch andere Ausbildungen des Anschlussbereichs 102 sind möglich.

Mit seinem Fußabschnitt 103 ist das Bauteil 101 an der ersten Schicht 4 des Verbindungselements mittels Reibschweißen angeschweißt. In einer bevorzugten Ausführungsform wird zum Reibschweißen das Verfahren des sogenannten zirkularen Vibrationsreibschweißens angewandt.

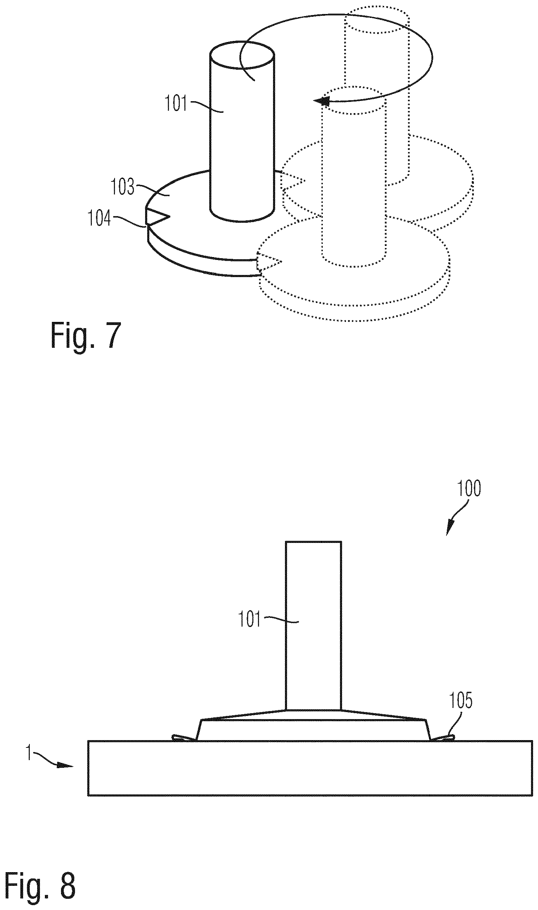

Fig. 7 zeigt eine schematische Darstellung des Bewegungsablaufs eines Bauteils beim zirkularen Vibrationsreibschweißen.

Die Energiezufuhr wird beim zirkularen Vibrationsreibschweißen durch eine Relativbewegung der zu verbindenden Fügeteile mittels einer zirkularen Kreisschwingbewegung eingebracht. Dies ist hier mit dem mit gestrichelten Linien an unterschiedlichen Positionen einer Kreisbahn dargestellten Bauteil 101 und dem die Kreisbewegung symbolisieren den Kreispfeil illustriert.

Bei der zirkularen Kreisschwingbewegung kann sich entweder nur eines der zu verschweißenden Teile oder alternativ auch beide zu verschweißenden Teile bewegen. Die Teile führen dabei relativ zueinander keine Rotation, sondern lediglich eine Kreisbahnbewegung aus. Das zirkulare Vibrationsreibschweißen wird gemeinhin auch als Orbitalreibschweißen bezeichnet.

Bei der dargestellten Illustration bewegt sich das Bauteil 101 entlang der zirkularen Kreisschwingbewegung ohne Rotation, wie anhand der Position der Kerbe 104 am linken Rand des Fußabschnitts 103 des Bauteils 101 erkennbar.

Vorteilhaft entfallen beim zirkularen Vibrationsreibschweißen beispielsweise die Einschränkungen des klassischen Rotationsreibschweißens, bei welchem nur annähernd rotationssymmetrische Bauteile verschweißt werden können. Im Unterschied zum Rotationsreibschweißen brauchen die Bauteile beim zirkularen Vibrationsreibschweißen also nicht rotationssymmetrisch sein, sondern können eine beliebige Form aufweisen.

Als weiterer Vorteil gegenüber dem Rotationsreibschweißen, bei dem die relative Geschwindigkeit eines Punktes auf der Oberfläche abhängig vom Durchmesser des Bauteils ist, liegt beim zirkularen Vibrationsreibschweißen eine derartige Abhängigkeit nicht vor. Stattdessen ist die Geschwindigkeit eines Punktes nur von der Kreisbahn der zirkularen Bewegung abhängig, wobei sich alle Punkte der zu verschweißenden Flächen mit gleicher Geschwindigkeit bewegen. Somit wird eine besonders gleichmäßige Energieeinbringung erreicht.

Fig. 8 zeigt eine schematische Seitenansicht einer Verbindungsanordnung 100.

Diese ist mittels Anschweißen des Bauteils 101 an die erste Schicht 4 des Verbindungselements 1 durch zirkulares Vibrationsreibschweißen, insbesondere mit einer stationären Zirkularschweißanlage, herstellbar.

Die Schweißverbindung der Verbindungsanordnung 100 ist von außen durch den beim zirkularen Vibrationsreibschweißen typischerweise entstehenden Reibschweißaustrieb 105 erkennbar.

Der Reibschweißaustrieb 105 enthält vorwiegend thermoplastisches Polymermaterial der ersten Schicht 4 des Verbindungselements 1. Die Bildung des Reibschweißaustrieb 105 bringt den Vorteil mit sich, dass zusammen mit dem Reibschweißaustrieb auch Verunreinigungen mit aus der Schweißzone ausgetrieben werden. Eine Vorreinigung der zu verschweißenden Oberflächen der ersten Schicht und des zu verbindenden Bauteils ist somit nicht notwendig. Als weiterer Vorteil werden durch den Reibschweißaustrieb 105 auch etwaige Unebenheiten oder Krümmungen der zu verschweißenden Oberflächen der ersten Schicht und des zu verbindenden Bauteils geebnet bzw. ausgeglichen, sodass eine durchgehende Schweißverbindung zwischen dem Verbindungselement 1 und dem Bauteil 101 sichergestellt wird.

Die erste Schicht 4 des Verbindungselements 1 weist daher eine Dicke 7 auf, die den zum Verschweißen benötigten Reibschweißaustrieb 105 zulässt.

Sofern das Verbundbauteil 2 eine Krümmung aufweist, ist die Oberfläche der ersten Schicht ebenfalls in einer entsprechenden Weise gekrümmt. In diesem Fall muss die Dicke der ersten Schicht 4 auf die Krümmung abgestimmt sein, um eine vollständige Verschweißung des Fußabschnitts 103 des Bauteils 101 mit dem Verbindungselement 1 zu gewährleisten.

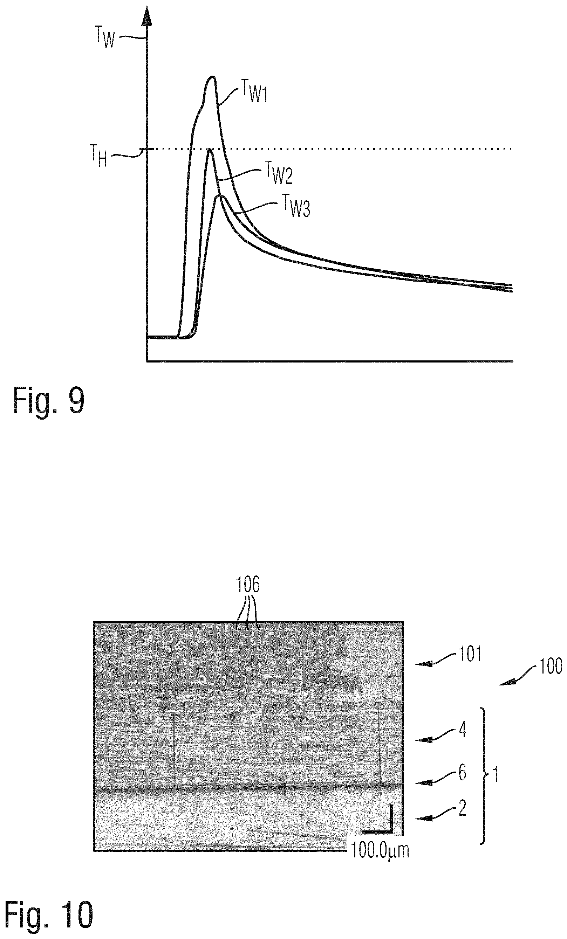

Fig. 9 zeigt einen Temperaturverlauf über der Zeit während des zirkularen Vibrationsreibschweißens eines Bauteils an das Verbindungselement.

Aufgetragen ist hier die Temperatur TW über der Zeit während des zirkularen Vibrationsreibschweißens zum Anschweißen des Bauteils 101 an verschiedenen Orten innerhalb des Verbindungselements 1.

Verschweißt wurde dazu ein wie in den Figuren 6 bis 8 gezeigt ausgebildetes Bauteil 101 mit einem ebenen Verbindungselement 1, welches eine erste Schicht 4 aufweist.

Die Kurve TW 1 zeigt qualitativ einen Temperaturverlauf in einem Bereich unter der ersten Schicht 4 bzw. im Bereich der Zwischenschicht 6 an einem Randbereich der Fügezone. Es werden hier maximale Temperaturen von beispielsweise kleiner als 250 °C erreicht. Oberhalb von einer Aushärtetemperatur TH des Epoxidharzes bewegt sich der Temperaturverlauf nur für eine kurze Zeitspanne von wenigen Sekunden, die beispielsweise inklusive Aufheizen bis zum Maximum und Abkühlen weniger als 5 Sekunden beträgt.

Die Kurve TW 2 zeigt den Temperaturverlauf in einem Bereich unter der ersten Schicht 4 in der Mitte der Fügezone. Eine maximale Temperatur liegt hier im Bereich der Aushärtetemperatur TH des Epoxidharzes.

Die Kurve TW 3 zeigt den Temperaturverlauf in dem Verbundbauteil 2 zwischen einer ersten und einer zweiten Faserlage des Fasergeleges des Verbundbauteils 2. Die Temperatur beträgt hier während des gesamten Schweißvorgangs stets weniger als die Aushärtetemperatur TH des Epoxidharzes.

Somit wird lediglich am Rand der Fügezone und nur kurzzeitig eine Temperatur oberhalb der Aushärtetemperatur TH des Epoxidharzes im Bereich der Zwischenschicht 6 erreicht. Vorteilhaft findet der Schweißprozess durch die lokale Temperatureinbringung außen an der ersten Schicht 4 daher in einer Weise statt, welche in dem Epoxidharz 3 des Verbundbauteils die Temperatur derart niedrig hält, dass dadurch keine Schädigung bzw. Degradation des Epoxidharzes verursacht wird.

Fig. 10 zeigt eine Lichtmikroskopaufnahme eines geätzten Querschliffs einer Verbindungsanordnung 100.

Die Probe wurde hier auf eine gleiche Weise präpariert, wie in Bezug auf Fig. 2A beschrieben.

Die Verbindungsanordnung 100 weist das Verbindungselement 1 mit den unterschiedlichen Abschnitten des Verbundbauteils 2, der ersten Schicht 4 und der dazwischen gebildeten Zwischenschicht 6 auf.

Außen auf die erste Schicht 4 aufgeschweißt und daher damit stofflich verbunden ist das Bauteil 101, welches hier beispielhaft als ein glasfaserverstärktes Bauteil, , ausgebildet ist. Die Glasfasern 106 sind in der Aufnahme einzeln erkennbar.

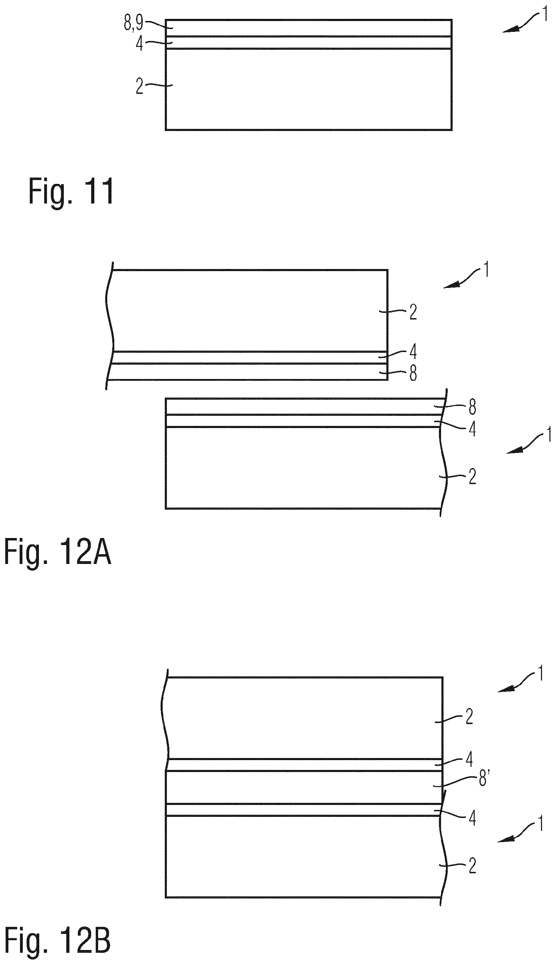

Fig. 11 zeigt eine schematische Darstellung eines Verbindungselements 1 mit einer ersten Schicht 4 und einer zweiten Schicht 8.

Das Verbindungselement 1 weist hier zusätzlich zum Verbundbauteil 2 und der ersten Schicht 4 eine mit der ersten Schicht 4 stofflich verbundene zweite Schicht 8 auf. Diese enthält ein zweites thermoplastisches Polymer 9, welches von dem ersten thermoplastischen Polymer 5 unterschiedlich ist. Mittels des zweiten thermoplastischen Polymers 9 bzw. der zweiten Schicht 8 können die Oberflächeneigenschaften des Verbindungselements1 beeinflusst werden.

Beispielsweise kann die zweite Schicht als zweites thermoplastisches Polymer Polyetheretherketon enthalten. Alternativ oder zusätzlich können beispielsweise auch Polyethersulfon, Polyamid und/oder Polyphenylensulfon in der zweiten Schicht 8 enthalten sein. Alternativ oder zusätzlich können weitere thermoplastische Polymere von der zweiten Schicht umfasst sein.

Die zweite Schicht 8 kann ausgebildet sein, um beispielsweise die chemische Beständigkeit des Verbindungselements zu verbessern. Des Weiteren kann die zweite Schicht 8 auch ausgebildet sein, um eine Kompatibilität zum Anschweißen eines Bauteils herzustellen, dessen Werkstoff mit dem ersten thermoplastischen Polymer 5 nicht kompatibel oder zum Anschweißen im Vergleich zum zweiten thermoplastischen Polymer 9 weniger geeignet ist.

Das Vorsehen der zweiten Schicht 8 ist insbesondere dann vorteilhaft, wenn deren Eigenschaften gewünscht sind, sich das zweite thermoplastischen Polymer 9 der zweiten Schicht 8 aber selbst nicht in dem Epoxidharz 3 des Verbundbauteils 2 löst. Die erste Schicht 4 mit dem ersten thermoplastischen Polymer 5 wirkt somit als Haftvermittler zwischen dem Epoxidharz 3 und der zweiten Schicht 8.

Ferner können mit der zweiten Schicht 8 auch die Schweißeigenschaften des Verbindungselements 1 beeinflusst werden. Beispielsweise kann die zweite Schicht 8 ein thermoplastisches Polymer 9 enthalten, welches eine niedriger viskose Schmelze und/oder einen niedrigeren Schmelzpunkt als das erste thermoplastische Polymer 5 aufweist, sodass ein Bauteil 101 einfacher an das Verbindungselement 1 an schweißbar ist. Ferner können so insbesondere auch zur Verbindung zweier Verbundbauteile zwei Verbindungselemente 1, welche jeweils mit einem der Verbundbauteile gebildet sind, einfacher miteinander verschweißt werden.

Beispielsweise enthält die erste Schicht Polyetherimid und weist eine Dicke von 100 µm auf, während die zweite Schicht Polyetheretherketon enthält und eine Dicke von 125 µm aufweist. Die erste Schicht dient somit der Anbindung an das Epoxidharz 3 des Verbundbauteils 2, wobei die zweite Schicht als äußere Funktionsschicht dient.

Fig. 12A zeigt eine schematische Ansicht zweier zu verbindender Verbindungselemente gemäß Fig. 11.

Zwei derartige Verbindungselemente 1 sind durch die jeweilige zweite Schicht 8, welche hier beispielhaft bessere Schweißeigenschaften als die erste Schicht 4 aufweist, gut miteinander verschweißbar.

Zum Verschweißen der beiden Verbindungselemente 1 werden diese vorzugsweise mit ihrer jeweiligen zweiten Schicht 8 in einem Überlappungsbereich aufeinander positioniert. Mittels Reibschweißen, vorzugsweise zirkularem Vibrationsreibschweißen, werden die beiden zweiten Schichten 8 dann miteinander vollflächig zu einer gemeinsamen zweiten Schicht 8' verbunden.

Fig. 12B zeigt die Verbindungselemente gemäß Fig. 12A in einem verbundenen Zustand.

Die gemeinsame zweite Schicht 8' verläuft dabei durchgängig über den Überlappungsbereich der beiden Verbindungselemente 1. Somit ist auf sehr einfache Weise eine zuverlässige Verbindung zwischen den beiden Verbindungselementen 1 bereitgestellt. Insbesondere sind so die beiden Epoxidharz enthaltenen Verbundbauteile 2 auf einfache und prozesssichere Weise mit hoher Festigkeit verbunden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise sind weitere als die in den Ausführungsbeispielen genannten thermoplastischen Polymere oder andere Konfigurationen der genannten thermoplastischen Polymere als Werkstoffe für die erste oder zweite Schicht denkbar. Ferner kommen auch andere Epoxidharze als das im Ausführungsbeispiel genannte Epoxidharz für das Verbundbauteil infrage.

Bei dem Verbundbauteil muss es sich nicht notwendigerweise um ein kohlenfaserverstärktes Bauteil handeln. Es kann sich ebenso um ein glasfaserverstärktes Bauteil oder eine andere Art von Verbundbauteil mit Epoxidharzanteil handeln. Ferner kann es sich auch um eine Sandwichstruktur handeln, wobei zumindest eine Deckschicht der Sandwichstruktur das Epoxidharz mit umfasst.

### Bezugszeichenliste

- 1: Verbindungselement
- 2: Verbundbauteil
- 2': Rohverbundbauteil
- 3: Epoxidharz
- 4, 4': erste Schicht
- 5: erstes thermoplastisches Polymer
- 6: Zwischenschicht
- 7: Dicke der ersten Schicht
- 8, 8': zweite Schicht
- 9: zweites thermoplastisches Polymer
- 10: Dicke des gesamten Konzentrationsübergangs
- 11: Dicke der Zwischenschicht
- 12: Volumenabschnitte
- 13: weiterer Werkstoff
- 14: Riss
- 15: Bläschen

- 100: Verbindungsanordnung
- 101: Bauteil
- 102: Anschlussbereich
- 103: Fußabschnitt
- 104: Kerbe
- 105: Reibschweißaustrieb
- 106: Glasfaser
- P: Druck
- T: Temperatur
- V: Vakuum

- TH: Aushärtetemperatur
- TW: Temperatur beim Reibschweißen
- TW1-TW3: Temperaturverlauf

## Patentansprüche

1. Verfahren zur Herstellung eines Verbindungselements (1), umfassend die folgenden Verfahrensschritte:
i) Bereitstellen eines Rohverbundbauteils (2') umfassend mindestens ein ungehärtetes Epoxidharz;
ii) Aufbringen einer ersten Schicht (4') umfassend ein erstes thermoplastisches Polymer (5) auf das Rohverbundbauteil (2'), wobei das erste thermoplastische Polymer (5) eine Schmelztemperatur und eine Glasübergangstemperatur, aufweist, die über einer Aushärtetemperatur des Epoxidharzes (3) liegt; und
iii) Aushärten des Rohverbundbauteils (2') bei einer Temperatur von mindestens 150 °C, wobei sich das erste thermoplastische Polymer (5) bei der Temperatur von mindestens 150 °C in dem mindestens einen ungehärteten Epoxidharz löst, wobei das thermoplastische Polymer (5) eine Glasübergangstemperatur höher als 185 °C, insbesondere höher als 200 °C, aufweist,
wobei das ungehärtete Epoxidharz eine Aushärtungstemperatur von maximal 180°C hat,
**dadurch gekennzeichnet,**
**dass** das thermoplastische Polymer durch eine Temperaturerhöhung im Kontaktbereich mit dem ungehärteten Epoxidharz teilweise in dem ungehärteten Epoxidharz gelöst wird und die Temperatur dann vor einem vollständigen Lösen des thermoplastischen Polymers im Epoxidhart auf eine Temperatur der Härtungstemperatur oder mehr des Epoxidharzes erhöht wird.

2. Verbindungselement (1), mit:
einem Verbundbauteil (2), welches ein gehärtetes Epoxidharz (3) umfasst;
einer ersten Schicht (4), welche ein erstes thermoplastisches Polymer (5) umfasst;
einer Zwischenschicht (6), welche zwischen dem Verbundbauteil (2) und der ersten Schicht (4) angeordnet ist und sowohl das gehärtete Epoxidharz (3) des Verbundbauteils (2) wie auch das erste thermoplastische Polymer (5) der ersten Schicht (4) enthält;
wobei das erste thermoplastische Polymer (5) eine Schmelztemperatur und eine Glasübergangstemperatur aufweist, die über einer Aushärtetemperatur des Epoxidharzes (3) liegt;
wobei das erste thermoplastische Polymer (5) bei einer Temperatur von mindestens 150 °C in dem Epoxidharz (3), das zur Herstellung des Verbundbauteils (2) verwendet wird, lösbar ist;
wobei das thermoplastische Polymer (5) eine Glasübergangstemperatur höher als 185 °C, insbesondere höher als 200 °C, aufweist;
wobei das Epoxidharz (3) sich ausgehend von dem Verbundbauteil in Richtung zu der ersten Schicht in Form einer Vielzahl von aneinander angrenzenden und/oder zumindest teilweise miteinander verbundenen Volumenabschnitten (12), insbesondere Blasen, in die Zwischenschicht (6) erstreckt und die Volumenabschnitte (12) in einem an das Verbundbauteil (2) angrenzenden Bereich der Zwischenschicht (6) einen größeren Durchmesser und/oder ein größeres Volumen aufweisen als in einem an die erste Schicht (4) angrenzenden Bereich der Zwischenschicht (6),
wobei das Epoxidharz (3) als ungehärtetes Epoxidharz eine Aushärtungstemperatur von maximal 180°C hat,
das Verbindungselement herstellbar durch das Verfahren nach Anspruch 1.

3. Verbindungselement nach Anspruch 2,
**dadurch gekennzeichnet,**
**dass** die erste Schicht (4) außen an dem Verbundbauteil (2) vorgesehen ist.

4. Verbindungselement nach wenigstens einem der Ansprüche 2 und 3,
**dadurch gekennzeichnet,**
**dass** die erste Schicht (4) aus dem ersten thermoplastischen Polymer (5) besteht und/oder das erste thermoplastische Polymer (5) ausgewählt ist aus mindestens einem aus einer Gruppe, bestehend aus Polyetherimid, Polysulfon, Polyphenylsulfon, Polyhydroxyether und Polycarbonat.

5. Verbindungselement nach wenigstens einem der Ansprüche 2 bis 4,
**dadurch gekennzeichnet,**
**dass** die erste Schicht (4) eine Dicke (7) in einem Bereich von größer als 50 µm bis kleiner oder gleich 300 µm, insbesondere in einem Bereich von 100 µm bis 150 µm, aufweist.

6. Verbindungselement nach wenigstens einem der Ansprüche 2 bis 5,
**dadurch gekennzeichnet,**
**dass** das Verbundbauteil (2) einen faserverstärkten Kunststoff, insbesondere einen kohlenstofffaserverstärkten Kunststoff, oder eine Sandwichstruktur mit faserverstärkter Kunststoffdeckschicht, insbesondere kohlenstofffaserverstärkter Kunststoffdeckschicht, aufweist.

7. Verbindungselement nach wenigstens einem der Ansprüche 2 bis 6,
**dadurch gekennzeichnet,**
**dass** auf der ersten Schicht (4) eine zweite Schicht (8) umfassend ein zweites thermoplastisches Polymer (9) angeordnet ist, insbesondere ein zweites thermoplastisches Polymer (9) ausgewählt aus mindestens einem aus einer Gruppe bestehend aus Polyetheretherketon, Polyethersulfon, Polyamid und/oder Polyphenylensulfon.

8. Verbindungselement, nach wenigstens einem der Ansprüche 2 bis 7,
**dadurch gekennzeichnet,**
**dass** die Zwischenschicht (6) eine Dicke (10; 11) in einem Bereich von 20 µm bis 100 µm, insbesondere 30 µm bis 80 µm, aufweist und/oder einen kontinuierlichen Konzentrationsübergang von dem Epoxidharz (3) zu dem ersten thermoplastischen Polymer (5) aufweist.

9. Verbindungselement nach Anspruch 2,
**dadurch gekennzeichnet,**
**dass** der Durchmesser der Volumenabschnitte (12) in dem an das Verbundbauteil (2) angrenzenden Bereich der Zwischenschicht (6) größer als 1 µm ist, insbesondere in einem Bereich von 1 µm bis 20 µm liegt, und in einem an die erste Schicht (5) angrenzenden Bereich der Zwischenschicht (6) kleiner als 1 µm, insbesondere kleiner als 0,1 µm, ist.

10. Verbindungsanordnung (100), mit:
einem Verbindungselement (1) gemäß einem der Ansprüche 2 bis 9; und
einem mit dem Verbindungselement (1) verbundenen Bauteil (101), wobei das Bauteil (101) an die erste und/oder zweite Schicht (4; 8) des Verbindungselements (1) mittels Schweißen, insbesondere mittels Reibschweißen, bevorzugt mittels zirkularem Vibrationsreibschweißen, angeschweißt ist.

11. Verfahren zum Herstellen einer Verbindungsanordnung (100), insbesondere einer Verbindungsanordnung gemäß Anspruch 10, mit den folgenden Verfahrensschritten:
Bereitstellen eines Verbindungselements (1) gemäß einem der Ansprüche 2 bis 9 und/oder hergestellt nach einem Verfahren gemäß Anspruch 1; und
Anschweißen eines mit dem Verbindungselement (1) zu verbindenden Bauteils (101) an die erste und/oder zweite Schicht (4; 8) des Verbindungselements (1) mittels Reibschweißen.

12. Verfahren nach Anspruch 11,
**dadurch gekennzeichnet,**
**dass** das Reibschweißen in Form von Vibrationsreibschweißen durchgeführt wird.

13. Verfahren nach Anspruch 12,
**dadurch gekennzeichnet,**
**dass** das Reibschweißen in Form von zirkularem Vibrationsreibschweißen durchgeführt wird.

## Claims

1. Method for producing a connecting element (1), comprising the following method steps:
i) providing a green composite component (2') comprising at least one uncured epoxy resin;
ii) applying a first layer (4') comprising a first thermoplastic polymer (5) to the green composite component (2'), the first thermoplastic polymer (5) having a melting temperature and a glass transition temperature lying above a curing temperature of the epoxy resin (3); and
iii) curing the green composite component (2') at a temperature of at least 150° C, the first thermoplastic polymer (5) dissolving in the at least one uncured epoxy resin at the temperature of at least 150° C, the thermoplastic polymer (5) having a glass transition temperature higher than 185° C, more particularly higher than 200° C,
the uncured epoxy resin having a curing temperature of not more than 180° C,
**characterized**
**in that** the thermoplastic polymer is dissolved partly in the uncured epoxy resin by a temperature increase in the contact region with the uncured epoxy resin and the temperature is then increased, before complete dissolution of the thermoplastic polymer in the epoxy resin, to a temperature of the curing temperature or more of the epoxy resin.

2. Connecting element (1), having:
a composite component (2) which comprises a cured epoxy resin (3);
a first layer (4) which comprises a first thermoplastic polymer (5);
an interlayer (6) which is disposed between the composite component (2) and the first layer (4) and contains not only the cured epoxy resin (3) of the composite component (2) but also the first thermoplastic polymer (5) of the first layer (4);
the first thermoplastic polymer (5) having a melting temperature and a glass transition temperature lying above a curing temperature of the epoxy resin (3);
the first thermoplastic polymer (5) being soluble at a temperature of at least 150° C in the epoxy resin (3) used for producing the composite component (2);
the thermoplastic polymer (5) having a glass transition temperature higher than 185° C, more particularly higher than 200° C;
the epoxy resin (3), starting from the composite component, extending in the direction of the first layer in the form of a multiplicity of mutually bordering and/or at least partly interconnected volume portions (12), more particularly bubbles, into the interlayer (6), and the volume portions (12) having a greater diameter and/or a greater volume in a region of the interlayer (6) that borders the composite component (2) than in a region of the interlayer (6) that borders the first layer (4),
the epoxy resin (3) as uncured epoxy resin having a curing temperature of not more than 180° C,
the connecting element producible by the method according to Claim 1.

3. Connecting element according to Claim 2,
**characterized**
**in that** the first layer (4) is provided externally on the composite component (2).

4. Connecting element according to at least one of Claims 2 and 3,
**characterized**
**in that** the first layer (4) consists of the first thermoplastic polymer (5) and/or the first thermoplastic polymer (5) is selected from at least one from a group consisting of polyetherimide, polysulfone, polyphenylsulfone, polyhydroxyether and polycarbonate.

5. Connecting element according to at least one of Claims 2 to 4,
**characterized**
**in that** the first layer (4) has a thickness (7) in a range from greater than 50 µm to less than or equal to 300 µm, more particularly in a range from 100 µm to 150 µm.

6. Connecting element according to at least one of Claims 2 to 5,
**characterized**
**in that** the composite component (2) comprises a fibre-reinforced plastic, more particularly a carbon fibre-reinforced plastic, or a sandwich structure with fibre-reinforced plastic outer layer, more particularly carbon fibre-reinforced plastic outer layer.

7. Connecting element according to at least one of Claims 2 to 6,
**characterized**
**in that** on the first layer (4) a second layer (8) comprising a second thermoplastic polymer (9) is disposed, more particularly a second thermoplastic polymer (9) selected from at least one from a group consisting of polyetheretherketone, polyethersulfone, polyamide and/or polyphenylenesulfone.

8. Connecting element according to at least one of Claims 2 to 7,
**characterized**
**in that** the interlayer (6) has a thickness (10; 11) in a range from 20 µm to 100 µm, more particularly 30 µm to 80 µm, and/or has a continuous concentration transition from the epoxy resin (3) to the first thermoplastic polymer (5).

9. Connecting element according to Claim 2,
**characterized**
**in that** the diameter of the volume portions (12) in the region of the interlayer (6) that borders the composite component (2) is greater than 1 µm, more particularly is in a range from 1 µm to 20 µm, and in a region of the interlayer (6) that borders the first layer (5) is less than 1 µm, more particularly less than 0.1 µm.

10. Connecting arrangement (100), having:
a connecting element (1) according to any of Claims 2 to 9; and a component (101) connected to the connecting element (1), the component (101) being welded to the first and/or second layer (4; 8) of the connecting element (1) by means of welding, more particularly by means of friction welding, preferably by means of circular vibrational friction welding.

11. Method for producing a connecting arrangement (100), more particularly a connecting arrangement according to Claim 10, having the following method steps:
providing a connecting element (1) according to any of Claims 2 to 9 and/or produced by a method according to Claim 1; and welding a component (101), for connection to the connecting element (1), to the first and/or second layer (4; 8) of the connecting element (1) by means of friction welding.

12. Method according to Claim 11,
**characterized**
**in that** the friction welding is carried out in the form of vibrational friction welding.

13. Method according to Claim 12,
**characterized**
**in that** the friction welding is carried out in the form of circular vibrational friction welding.

## Revendications

1. Procédé de fabrication d'un élément de liaison (1), comprenant les étapes de procédé suivantes :
i) la fourniture d'un composant composite brut (2') comprenant au moins une résine époxy non durcie ;
ii) l'application d'une première couche (4') comprenant un premier polymère thermoplastique (5) sur le composant composite brut (2'), le premier polymère thermoplastique (5) ayant une température de fusion et une température de transition vitreuse qui est supérieure à une température de durcissement de la résine époxy (3) ; et
iii) le durcissement du composant composite brut (2') à une température d'au moins 150 °C, le premier polymère thermoplastique (5) se dissolvant à la température d'au moins 150 °C dans l'au moins une résine époxy non durcie, le polymère thermoplastique (5) ayant une température de transition vitreuse supérieure à 185 °C, notamment supérieure à 200 °C,
la résine époxy non durcie ayant une température de durcissement de 180 °C maximum,
**caractérisé en ce que**
le polymère thermoplastique est partiellement dissous dans la résine époxy non durcie par une augmentation de température dans la zone de contact avec la résine époxy non durcie, et la température est ensuite augmentée à une température égale ou supérieure à la température de durcissement de la résine époxy avant une dissolution complète du polymère thermoplastique dans la résine époxy dure.

2. Élément de liaison (1), avec :
un composant composite (2) comprenant une résine époxy durcie (3) ;
une première couche (4), qui comprend un premier polymère thermoplastique (5) ;
une couche intermédiaire (6), qui est agencée entre le composant composite (2) et la première couche (4) et qui contient à la fois la résine époxy durcie (3) du composant composite (2) et le premier polymère thermoplastique (5) de la première couche (4) ;
le premier polymère thermoplastique (5) présentant une température de fusion et une température de transition vitreuse qui est supérieure à une température de durcissement de la résine époxy (3) ;
le premier polymère thermoplastique (5) étant soluble à une température d'au moins 150 °C dans la résine époxy (3) qui est utilisée pour fabriquer le composant composite (2) ;
le polymère thermoplastique (5) présentant une température de transition vitreuse supérieure à 185 °C, notamment supérieure à 200 °C ;
la résine époxy (3) s'étendant à partir du composant composite en direction de la première couche sous la forme d'une pluralité de sections de volume (12) adjacentes les unes aux autres et/ou au moins partiellement reliées les unes aux autres, notamment de bulles, dans la couche intermédiaire (6) et les sections de volume (12) présentant dans une zone de la couche intermédiaire (6) adjacente au composant composite (2) un plus grand diamètre et/ou un plus grand volume que dans une zone de la couche intermédiaire (6) adjacente à la première couche (4),
la résine époxy (3), en tant que résine époxy non durcie, ayant une température de durcissement de 180°C maximum,
l'élément de fixation pouvant être fabriqué par le procédé selon la revendication 1.

3. Elément de liaison selon la revendication 2,
**caractérisé en ce que**
**en ce que** la première couche (4) est prévue à l'extérieur de l'élément composite (2).

4. Elément de liaison selon au moins l'une des revendications 2 et 3,
**caractérisé en ce que**
**en ce que** la première couche (4) est constituée du premier polymère thermoplastique (5) et/ou le premier polymère thermoplastique (5) est choisi parmi au moins un élément d'un groupe constitué par le polyétherimide, la polysulfone, la polyphénylsulfone, le polyhydroxyéther et le polycarbonate.

5. Elément de liaison selon au moins l'une des revendications 2 à 4,
**caractérisé en ce que**
**en ce que** la première couche (4) présente une épaisseur (7) dans une plage allant de plus de 50 µm à moins ou égale à 300 um, en particulier dans une plage allant de 100 µm à 150 µm.

6. Elément de liaison selon au moins l'une des revendications 2 à 5,
**caractérisé en ce que**
**en ce que** l'élément composite (2) présente une matière plastique renforcée par des fibres, en particulier une matière plastique renforcée par des fibres de carbone, ou une structure sandwich avec une couche de couverture en matière plastique renforcée par des fibres, en particulier une couche de couverture en matière plastique renforcée par des fibres de carbone.

7. Elément de liaison selon au moins l'une des revendications 2 à 6,
**caractérisé en ce que**
**en ce que** sur la première couche (4) est disposée une deuxième couche (8) comprenant un deuxième polymère thermoplastique (9), en particulier un deuxième polymère thermoplastique (9) choisi parmi au moins l'un d'un groupe constitué par la polyétheréthercétone, la polyéthersulfone, le polyamide et/ou la polyphénylènesulfone.

8. Elément de liaison, selon au moins l'une des revendications 2 à 7,
**caractérisé en ce que**
**en ce que** la couche intermédiaire (6) présente une épaisseur (10 ; 11) dans une plage de 20 um à 100 um, en particulier de 30 um à 80 um, et/ou présente une transition de concentration continue de la résine époxy (3) vers le premier polymère thermoplastique (5).

9. Elément de liaison selon la revendication 2,
**caractérisé en ce que**
**en ce que** le diamètre des sections de volume (12) est supérieur à 1 µm dans la zone de la couche intermédiaire (6) adjacente à l'élément de construction composite (2), en particulier se situe dans une plage de 1 um à 20 um, et est inférieur à 1 um, en particulier inférieur à 0,1 um, dans une zone de la couche intermédiaire (6) adjacente à la première couche (5).

10. Agencement de liaison (100), comprenant :
un élément de liaison (1) selon l'une des revendications 2 à 9 ; et un composant (101) relié à l'élément de liaison (1), le composant (101) étant soudé à la première et/ou à la deuxième couche (4 ; 8) de l'élément de liaison (1) par soudage, en particulier par soudage par friction, de préférence par soudage par friction vibratoire circulaire.

11. Procédé de fabrication d'un ensemble de connexion (100), en particulier d'un ensemble de connexion selon la revendication 10, comprenant les étapes de procédé suivantes :
fournir un élément de connexion (1) selon l'une quelconque des revendications 2 à 9 et/ou fabriqué selon un procédé selon la revendication 1 ; et souder par friction un composant (101) à connecter à l'élément de connexion (1) sur la première et/ou la deuxième couche (4 ; 8) de l'élément de connexion (1).

12. Procédé selon la revendication 11,
**caractérisé en ce que**
que le soudage par friction est effectué sous forme de soudage par friction vibratoire.

13. Procédé selon la revendication 12,
**caractérisé en ce que**
**en ce que** le soudage par friction est effectué sous la forme d'un soudage par friction vibratoire circulaire.
